# EUROPEAN PATENT APPLICATION

(11) **EP 1 152 360 A2**
(43) Date of publication of application: **07.11.2001**
(21) Application number: 01303740.3
(22) Date of filing: 24.04.2001
(51) Int. Cl.: G06F 17/60

(54) **Medical insurance system**

(30) Priority: 25.04.2000 JP 2000124607
(71) Applicant: Ishii, Hukaru, Tokyo (JP)
(72) Inventor: Ishii, Hukaru, Tokyo (JP)
(74) Representative: Cross, Rupert Edward Blount

(57) **Abstract**

A medical insurance system wherein disclosure of preexisting conditions is appropriately performed upon the creation of an insurance contract. A party wishing to purchase insurance from an insurance company 10 agrees that personal medical data obtained from a database 16 of a medical facility 14, possibly including data from a physical examination conducted at the medical facility 14 or a prior diagnosis of illness, is stored in a database 12 of the insurance company 10. The parties agree that in this manner disclosure of preexisting conditions is regarded as being complete. Disclosure of preexisting conditions is easily and accurately performed.

## Description

### BACKGROUND OF THE INVENTION

### 1. Field of the invention

The present invention generally relates to an improved medical insurance system in which prescribed benefits are paid for sickness or bodily injury.

### 2. Description of the Related Art

Today there exists a vast number of insurance plans and systems wherein prescribed benefits are paid to an insured party for illness or bodily injury encountered during daily life or while traveling. Generally, to obtain this type of insurance protection, an applicant enters into an insurance contract with an insurance company which offers such insurance so that the costs for their medical treatment will be covered in case of unexpected illness or injury. Under the insurance contract, insurance benefits for unexpected sickness or bodily injury is paid to an insured and some portion of the insured's medical expenses are covered. This type of insurance scheme is what is referred to as a "medical insurance system" in the following description.

For conventional medical insurance systems as described above, the insurance company offering the insurance often requires that the applicant disclose his or her preexisting conditions to the insurance company before the company will offer insurance. However, problems often arise because many applicants are unable to disclose their preexisting conditions in an appropriate manner because of their insufficient medical knowledge.

When the insurance company reserves the right not to pay benefits for preexisting conditions such as illnesses or the like that the applicant has disclosed, an additional problem is created in that some applicants withhold information on preexisting conditions for fear that, because expenses for medical treatment relating to the disclosed preexisting conditions are not covered by insurance benefits, they will lose benefits.

### SUMMARY OF THE INVENTION

It is an object of the present invention to provide a medical insurance system wherein preexisting conditions can be appropriately disclosed when parties enter into an insurance contract.

In order to achieve the object, the present invention provides a medical insurance system for paying prescribed benefits for medical treatment conducted against sickness or bodily injury, which comprises a database in which an insurer stores personal medical data for an individual. In this insurance system, disclosure of preexisting conditions is considered as being completed when medical data of an individual is stored in the database.

This makes it easier to disclose preexisting conditions appropriately.

In addition to the above, according to the present invention, exclusion rate for disclosed sickness of the insured is established according to its details in said medical insurance system.

This allows the policy owner to receive a prescribed benefit for the disclosed preexisting conditions.

Further, according to the present invention, medical data may be passed from a database of a medical facility at which the insured received medical treatment or physical examination.

Further, according to the present invention, the medical data stored in the database of the medical facility may be made accessible to the insurer in said medical insurance system.

Further, according to the present invention, the medical data stored in the database of the medical facility may be delivered to a database of the insurer through a network in said medical insurance system.

Also according to the present invention, the medical data stored in the database of the medical facility may be made accessible by another medical facility through a network.

This allows the insured to receive effective and appropriate medical treatment even when the insured gets sick at remote sites.

In addition, portability may be provided to the medical data stored in the database of the medical facility through use of a portable health data system.

### BRIEF DESCRIPTION OF THE DRAWINGS

Fig. 1 is a block diagram illustrating the structure of a medical insurance system according to the present invention, and
Fig. 2 is a graph showing the effect on mortality rates and benefits paid out when in the amount of disclosed information about preexisting conditions is increased by employing the medical insurance system described in Fig. 1.

### DESCRIPTION OF THE PREFERED EMBODIMENT

The following is a description of the preferred embodiment of the present invention based on the accompanying drawings.

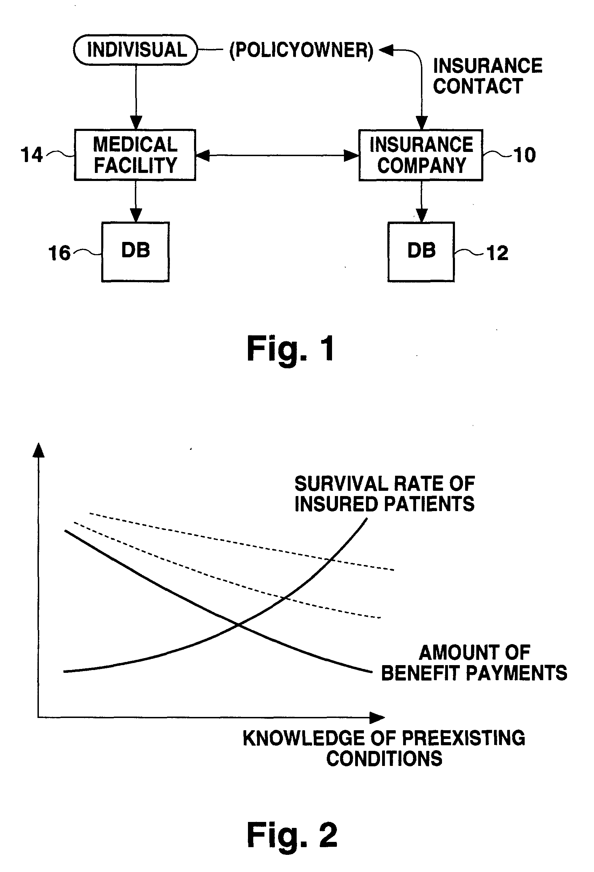

Fig. 1 is a block diagram illustrating the structure of a medical insurance system of the present invention. An insurance company 10 of the insurer has a database 12 in which personal medical data about preexisting conditions is stored. The insurance purchaser receives physical examination or diagnosis of illness made at a specified medical facility 14. The personal medical data of the insurance purchaser obtained from the physical examination or diagnosis is stored in a database 16 of the medical facility 14.

The insurance company 10 must have knowledge of preexisting conditions of the insured, which must be disclosed by the purchaser when the insurance company 10 creates an insurance contract for the insured as a policy owner. One of the significant characteristics of the present invention is that the above-mentioned disclosure is considered as being completed when the insurance company 10 receives the personal medical data of the insured stored in the database 16 of the medical facility 14 and stores it in the database 12 of the insurance company 10 in said medical insurance system. In this case, the insurance company 10 is capable of making a contract either with the insured directly or with a different person from the insured as a policy owner.

Structuring the medical insurance system as described above allows the medical data acquired from the database 16 of the medical facility 14 to be regarded as data disclosing preexisting conditions. As a result, it becomes possible to obtain appropriate disclosure in the case where the insurance company 10 makes an insurance contract with an applicant whose medical knowledge is insufficient.

The medical facility 14 conducts physical examination or diagnoses illness for the insured and stores the resulting personal medical data of the insured in the database 16. The medical facility 14 is also capable of receiving medical data of the insured obtained from other medical facilities in which the insured receives physical examination or diagnosis and stores this in the database 16. The personal medical data of each insured party is stored in the database 16 of the medical facility 14 is so established as to be accessible to the insurer of the insurance company 10 through the medical facility 14. With this system, permission must be given for the insurance company to access the personal medical data stored in the database 16 of the medical facility 14. Once this has been agreed to, the insurance company 10 is allowed to easily store the personal medical data of the insured in the database 12 of the insurance company 10 as data of disclosed preexisting conditions and to conclude an insurance contract with the purchaser.

It is preferable to configure the personal medical data of each person stored in the database 16 of the medical facility 14 in such a manner that it can be delivered to the database 12 of the insurance company 10 through a network. The personal medical data of each insured is stored in the database 16 of the medical facility 14 is delivered to the database 12 of the insurance company 10 and disclosure of preexisting conditions is appropriately completed at the creation of an insurance contract.

It is also preferable to allow the personal medical data of the insured stored in the database 16 of the medical facility 14 to be distributed to another medical facility through a network. This assists the insured party when they are affected by an unexpected illness while visiting a distant location. Because the medical data including information such as preexisting conditions of the insured can be promptly distributed from the database 16 of the medical facility 14 where the insured usually consults for medical treatment or physical examination to the a medical facility where the insured party is being treated, a medical facility at remote site may be able to more quickly diagnosis and more appropriately treat the insured patient. As a result, the recovery of the insured patient is facilitate and the risk that the patient will die as a result of misdiagnosis or delayed treatment or the like is reduced. Because, as a result, the risk of death is reduced, advantages are provided to both the insured and the insurance company 10. The advantage for the insured is maintaining their health and life and the advantage for the insurance company 10 is decreasing the amount of payment for death benefits.

It is also preferable to configure notebook-type portable health data system wherein necessary information is selected from the medical data of the insured stored in the database 16 of the medical facility 14 as required and the information is shown on the screen of a visual display. Accordingly, the insured is capable of carrying this system and displaying medical data concerning his/her health conditions on the notebook-type portable health data system. As a result, when faced with an unexpected illness, an insured party can receive appropriate medical treatment by consulting a doctor and providing their medical data. The notebook-type portable health data system may give a physician conducting therapy on the insured the capability of additionally accessing the database 16 of the medical facility 14 depicted in Fig. 1 in order to obtain additional information.

Fig. 2 is a graph showing the effect on mortality rates and benefits paid out when in the amount of disclosed information about preexisting conditions is increased by employing the medical insurance system described in Fig. 1. As can be seen in the chart, as the knowledge of preexisting conditions increases, the survival rate increases and benefit payments decrease..

Increasing the amount of disclosed information about preexisting conditions brings in a high probability of speedily delivering medical data of the insured from the database 16 of the medical facility 14 and accordingly raising the possibility of conducting appropriate treatment for the unexpected illness of the insured at remote site. As a result, the survival rate of insured parties increases, which provides insurance customers with an additional feeling of security when purchasing insurance when traveling for business or pleasure.

For the insurance company 10, increasing the amount of information about preexisting conditions also raises the percentage of exclusions, which further reduces benefit payments above the amount of reduced death benefit arising from increased survivability of insured parties. This helps the insurance company 10 maintain profitability and competitiveness.

By extension, for example, it is possible to apply an appropriate specific exclusion rate to the preexisting conditions disclosed to the insurance company 10 in the medical insurance system of the present invention according to details of the preexisting conditions in order to share the cost savings of the insurance company 10 with the insured. The insurance company 10 is conventionally discharged from the preexisting conditions disclosed by the insured. Exclusion of the preexisting conditions disclosed by the insured is conventionally granted to the insurance company 10. Although the insurance company 10 is, thus, under no obligation to pay benefits when the insured gets treatment for the disclosed preexisting conditions, in conventional pricing schemes, the insurance company 10 is assumed to pay benefits for the disclosed preexisting conditions to a certain extent as described above. As a result, the incidence of benefit payment increases as shown by dashed lines in Fig. 2. Profitability of the insurance company 10 is, however, assured in spite of the increase of the benefit payment because of the increased cost effectiveness as described above.

The insured is capable of either holding the decrease of benefit payment caused by increasing the amount of disclosed information about preexisting conditions in check because he or she is allowed to receive the benefit for the declared preexisting conditions, which is conventionally not paid, or getting a lager benefit than in conventional plans, according to how the percentage of exclusions is established. Thus, it can be seen that this system has advantages, beyond the increase of survivability as described above, from the insured's point of view by taking these points into account.

As described in the embodiment, the present invention allows disclosure of preexisting conditions to be simply and appropriately performed by considering the disclosure of preexisting conditions at the creation of an insurance contract as being completed when medical data of the insurance purchaser is stored in the database of the insurer.

And allowing the percentage of exclusions for the disclosed sickness to be established by the insurer according to details of the disclosed preexisting conditions in this invention makes it possible to lower the percentage of exclusions in order to provide advantages for both the insurer and the insured.

In addition, the present invention allows appropriate disclosure to be completed when making an insurance contract with an applicant, as the insured whose medical knowledge is insufficient because the medical data stored in the database of the insurer comprises information obtained from diagnosis or examination completed at a professional medical facility.

The present invention further helps ensure that effective and suitable treatment can be quickly performed when an insured party becomes ill at remote location by allowing the medical data to be delivered to another medical facility from the database of the appropriate medical facility, thereby increasing the survivability rate for insured parties . Meanwhile, allowing the insured to carry a prescribed portion of medical data stored in the database of the medical facility in a portable health data system will further increase the likelihood that the insured will receive appropriate treatment conducted from a physician at a remote location.

## Claims

1. A medical insurance system for paying prescribed benefits for medical treatment of sickness or bodily injury comprising:
a database in which an insurer stores personal medical data about the health of an individual; wherein
disclosure of preexisting conditions is regarded as being completed when said personal medical data of the individual is stored in said database.

2. A medical insurance system according to claim 1, wherein a percentage of exclusions is established against said disclosed preexisting conditions of the individual according to details of the preexisting conditions.

3. A medical insurance system according to claim 1 or 2, wherein said medical data is received from a database of a medical facility at which the individual has received a diagnosis or a physical examination.

4. A medical insurance system according to claim 3, wherein said medical data stored in the database of said medical facility is accessible to an insurer.

5. A medical insurance system according to claim 3, wherein said medical data stored in the database of said medical facility is delivered to a database of the insurer through a network.

6. A medical insurance system according to any one of claims 3 to 5, wherein the medical data stored in the database of said medical facility is can be accessed by another medical facility through a network.

7. A medical insurance system according to any one of claims 3 to 5, wherein the medical data stored in the database of said medical facility can be stored in a portable health data system.
